# EUROPÄISCHE PATENTANMELDUNG

(11) **EP 1 795 386 A1**
(43) Veröffentlichungstag der Anmeldung: **13.06.2007**
(21) Anmeldenummer: 06024263.3
(22) Anmeldetag: 23.11.2006
(51) Int. Cl.: B60G 17/04, B60G 11/56, B60G 15/12

(54) **Aktives Fahrwerk für ein Kraftfahrzeug**

(30) Priorität: 10.12.2005 DE 102005059116
(71) Anmelder: ZF FRIEDRICHSHAFEN AG, 88038 Friedrichshafen (DE)
(72) Erfinder: Wohanka, Uwe, 88690 Uhldingen-Mühlhofen (DE); Kinzelmann, Wolfgang, 88212 Ravensburg (DE); Thies, Andreas, 88045 Friedrichshafen (DE); Knecht, Heinz, 53783 Eitorf (DE)

(57) **Zusammenfassung**

Es wird ein aktives Fahrwerk für ein Kraftfahrzeug vorgeschlagen, welches einen Aktuator (2) mit einem hydraulischen oder pneumatischen Stellzylinder (3) und einen Schwingungsdämpfer (4) umfasst, bei dem der Aktuator (2) eine teiltragende Aufbaufeder (5) aufweist, wobei parallel zum Aktuator (2) eine teiltragende zweite Aufbaufeder (1) geschaltet ist, der Schwingungsdämpfer (4) parallel zur Aufbaufeder (5) des Aktuators (2) geschaltet und der Stellzylinder (3) in Reihe zur Aufbaufeder (5) und zum Schwingungsdämpfer (4) geschaltet ist.

## Beschreibung

Die vorliegende Erfindung betrifft ein aktives Fahrwerk für ein Kraftfahrzeug gemäß dem Oberbegriff des Patentanspruchs 1.

Die Auslegung eines konventionellen Fahrwerks für ein Kraftfahrzeug stellt einen Kompromiss zwischen Fahrsicherheit und Fahrkomfort dar, da eine harte Dämpfung ein gutes Handling gewährleistet und eine weiche Dämpfung den Komfort erhöht. Um beide Aspekte kombinieren zu können, sind aus dem Stand der Technik aktive Fahrwerke zum Ausgleich von Wank- und Nick- und Hubbewegungen bekannt.

Aus der DE 196 06 991 A1 ist eine Feder-Stoßdämpfer-Einrichtung für ein Kraftfahrzeug bekannt, bei der durch ein Hydraulikaggregat der Abstand des Fahrzeugaufbaus nach dem Fahrverhalten des Fahrzeugs gegenüber den Rädern steuerbar ist, wobei die Feder zwischen einem beweglichen Element des Hydraulikaggregates und dem Dämpfungszylinder des Stoßdämpfers eingespannt ist und das bewegliche Element des Hydraulikaggregates derart an dem Stoßdämpfer gleitend gelagert ist, dass die Verschiebung ausschließlich im Bereich der Kolbenstange des Stoßdämpfers erfolgt, wodurch die Reibungskräfte beim Verschieben des beweglichen Elementes weitgehend reduziert werden.

Ferner ist aus der DE 196 04 558 C1 ein Kolben-Zylinderaggregat bekannt, umfassend einen Zylinder, in dem eine Kolbenstange axial beweglich angeordnet ist, ein erstes mit dem Zylinder in Wirkverbindung stehendes Anschlussorgan, ein zweites Anschlussorgan, das mit der Kolbenstange in Verbindung steht, einen Verstellzylinder mit einem Druckmediumanschluss, wobei der Verstellzylinder mit einem der Anschlussorgane in Wirkverbindung steht und über Zu- oder Abfuhr vom Druckmedium der Abstand zwischen dem ersten und dem zweiten Anschlussorgan einstellbar ist. Hierbei ist der Verstellzylinder in Reihe zum Zylinder angeordnet und die Kolbenstange stellt eine Führungsbahn für den Verstellzylinder dar.

Des weiteren ist aus der DE 195 29 580 A1 ein verstellbares Federbein für Kraftfahrzeuge bekannt, welches eine gute Legeregelung der abgefederten Kraftfahrzeugteile ermöglichen und eine definierte regel- und abstimmbare Dämpfungs- und Federrate aufweisen soll. Das Federbein umfasst einen von einer Schraubenfeder umgebenen Schwingungsdämpfer mit einem Dämpferzylinder, wobei die Schraubenfeder einerseits durch einen mit dem Dämpferzylinder über einen äußeren und einen inneren, den Dämpferzylinder konzentrisch umgebenden Stellzylinder verbundenen ersten Federteller und andererseits durch einen in der Nähe des Anlenkungspunktes der Kolbenstange des Arbeitskolbens des Dämpferzylinders mit der Kolbenstange verbundenen zweiten Federteller so gehalten und eingespannt ist, dass beim Einfahren des Kolbens in den Dämpferzylinder die Schraubenfeder belastet wird. Hierbei sind die beiden Stellzylinder zur Änderung des Bodenabstandes der Karosserie zueinander teleskopartig verschiebbar ausgebildet.

Bei der aus der DE 195 29 580 A1 bekannten Konstruktion ist der erste Federteller am äußeren Stellzylinder befestigt, wobei der äußere Stellzylinder an seinem der Kolbenstange zugewandten Ende Einrichtungen zur Führung und Dichtung des Dämpferzylinders und an dem gegenüberliegenden Ende Einrichtungen zur Führung und Dichtung des inneren Stellzylinders aufweist. Hierbei ist der innere Stellzylinder am Dämpferzylinder befestigt und relativ zum äußeren Stellzylinder durch das Einbringen eines Druckmediums in den von den Stellzylindern und dem Dämpferzylinder begrenzten ringförmigen Innenraum teleskopartig verschiebbar.

Im Rahmen der DE 100 43 711 A1 ist ein Aktuator zur aktiven Fahrwerksregelung unter Verwendung eines ein Drehmoment erzeugenden Stellgliedes beschrieben, der mit dem am Rad und am Fahrzeugaufbau befestigten Lenker verbunden ist, wobei das Stellglied zwischen Fahrzeugaufbau und Lenker angeordnet ist und ein dem Wank- und Nickausgleich entsprechenden und/oder ein die Dämpfung der Lenkerschwankungen gewährleistendes Drehmoment auf den Lenker überträgt. Vorzugsweise ist das Stellglied als Schwenkmotor ausgebildet.

Ein weiterer Aktuator zur aktiven Fahrwerksregelung ist aus der DE 103 06 228 A1 bekannt. Er umfasst ein zwischen Rad und Fahrzeugaufbau angeordnetes Stellglied, welches Nick- und Wankbewegungen ausgleicht und zusätzlich die Hubbewegung des Fahrzeugs nach dem Skyhook-Prinzip verringert. Das Stellglied ist als Schwenkmotor ausgebildet und stellt zwischen Rad und Aufbau zusätzlich zum Aktuatormoment für den Wank- und Nickausgleich ein Aktuatormoment zur Verringerung der Aufbauhubbewegung bereit.

Bei diesen aus dem Stand der Technik bekannten Konstruktionen ist der Energiebedarf aufgrund der Fußpunktverstellung des Federungssystems bzw. der Betätigung des Aktuators in nachteiliger Weise hoch.

Des weiteren ist im Rahmen der DE 44 28 605 A1 ein Hydrauliksystem für ein aktives Fahrwerk, insbesondere zur Kompensation der Wank- und Nickbewegung beschrieben, umfassend Aktuatoren mit jeweils einem Druckspeicher für eine Vorderachse und eine Hinterachse eines Kraftfahrzeuges, eine Pumpe zur Versorgung der Aktuatoren, Zufluss- und Abflussleitungen von den Aktuatoren zu einem Tank, Schaltventile zur Steuerung der Aktuatoren und einen Zusatzdruckspeicher für jede Fahrzeugachse. Hierbei ist der Zusatzdruckspeicher bei im Wesentlichen horizontaler Fahrzeugaufbaulage gleichzeitig mit den Aktuatoren einer Fahrzeugachse verbunden, bei einer Kurvenfahrt von dem kurvenäußeren Aktuator abgetrennt und mit dem kurveninneren Aktuator verbunden. Des weiteren ist den Aktuatoren eine verstellbare Dämpfereinrichtung wirkmäßig zugeordnet, wobei in dem Maße, wie der kurveninnere Aktuator mit dem Zusatzspeicher verbunden ist, die verstellbare Dämpfereinrichtung für den kurveninneren Aktuator auf eine stärkere Dämpfung eingestellt wird.

Der vorliegenden Erfindung liegt die Aufgabe zugrunde, ein aktives Fahrwerk zur aktiven Fahrwerksregelung zur Beeinflussung von Nick-, Hub- und Wankbewegungen anzugeben, welches die Funktion der Niveauregulierung aufweist und dessen Energiebedarf im Vergleich zum Energiebedarf der aus dem Stand der Technik bekannten Systeme gering ist. Zudem soll der Aktuator des erfindungsgemäßen Fahrwerks nachträglich in Fahrzeuge einbaubar sein.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird ein aktives Fahrwerk eines Kraftfahrzeugs vorgeschlagen, welches einen Aktuator mit einem hydraulischen oder pneumatischen Stellzylinder, eine teiltragende Aufbaufeder und einen Schwingungsdämpfer sowie eine parallel zum Aktuator geschaltete teiltragende zweite Aufbaufeder umfasst. Hierbei ist der Schwingungsdämpfer parallel zur Aufbaufeder des Aktuators geschaltet und der Stellzylinder ist in Reihe zur Aufbaufeder und zum Schwingungsdämpfer geschaltet.

Gemäß der Erfindung ist vorgesehen, dass durch die parallel zum Aktuator geschaltete zweite Aufbaufeder die statischen Aufbaumassen größtenteils getragen werden. In vorteilhafter Weise ist diese Aufbaufeder so ausgelegt, dass sie die statischen Vertikalkräfte, die aus der momentanen Aufbaumasse plus Zuladung resultieren, abstützt. In allen anderen Fällen nimmt der Aktuator die Änderungen der statischen Aufbaukräfte durch Beladungsänderung auf.

Hierbei kann die zweite Aufbaufeder als Luftfeder oder hydropneumatische Federung, Stahlfeder oder Stahlfeder mit Fußpunktverstellung ausgeführt sein. Bei Fahrzeugen mit geringer Ladungsspreizung ist eine konventionelle Stahlfeder als zweite Aufbaufeder ausreichend, wobei in diesem Fall der Aktuator zusätzlich die Funktion der Niveauregulierung übernimmt. Bei großer Ladungsspreizung, wie es z B. bei NKWs der Fall ist, ist die Aufbaufeder als Luftfeder oder hydropneumatische Feder ausgeführt und dient zusätzlich der Niveauregulierung, wodurch der stationäre Offset (Grundlast) des Aktuators auf Null gesetzt wird, so dass Energie nur für den Ausgleich von Huben und/oder Nicken und/oder Wanken benötigt wird. Die Ausführung des Aktuators hat den Vorteil, dass die zur Verfügung stehenden Federwege beladungsunabhängig werden.

Der Aktuator dient im Wesentlichen dazu, Reaktionskräfte aus fahrdynamischen Fahrzeugzustandsänderungen durch Aufbringung zusätzlicher Zug- und Druckkräfte zu kompensieren, wobei aufgrund der Ausführung als teiltragendes System und somit aufgrund der geringeren Aktuatorkräfte der Energiebedarf gegenüber einem ABC-System gering ist.

Durch die erfindungsgemäße Konzeption werden der Stabilisator und die Aufbaufeder eines konventionellen Achssystems in vorteilhafter Weise substituiert, wobei im Radaufhängungsbereich Bauraumvorteile entstehen, da ein hydraulischer Aktuator in volltragender Ausführung nur geringfügig größer baut als ein konventioneller Dämpfer. Die erforderlichen Nebenaggregate des Aktuators werden vorzugsweise an der Fahrzeugkarosserie montiert.

Ein weiterer Vorteil besteht darin, dass der Aktuator des erfindungsgemäßen aktiven Fahrwerks als Add-On-Lösung nachträglich oder optional mit relativ geringem Aufwand in bestehende Achssysteme integrierbar ist. Zudem ist der Aktuator in weiten Grenzen skalierbar und kann sowohl in Kleinstwagen als auch in handelsüblichen LKW und Bussen eingesetzt werden.

Die Erfindung wird im Folgenden anhand der beigefügten Figuren beispielhaft näher erläutert.
Es zeigen:
- Figur 1: eine schematische Darstellung eines erfindungsgemäßen aktiven Fahrwerks;
- Figur 2: eine schematische Darstellung der Anordnung zur Ansteuerung eines hydraulischen Stellzylinders des Aktuators für ein aktives Fahrwerk gemäß der Erfindung;
- Figur 3: eine schematische Darstellung einer weiteren Ausführungsform der Anordnung zur Ansteuerung eines hydraulischen Stellzylinders des Aktuators für ein aktives Fahrwerk gemäß der Erfindung und
- Figur 4: eine schematische Darstellung einer weiteren Ausführungsform der Anordnung zur Ansteuerung eines hydraulischen Stellzylinders des Aktuators für ein aktives Fahrwerk gemäß der Erfindung.

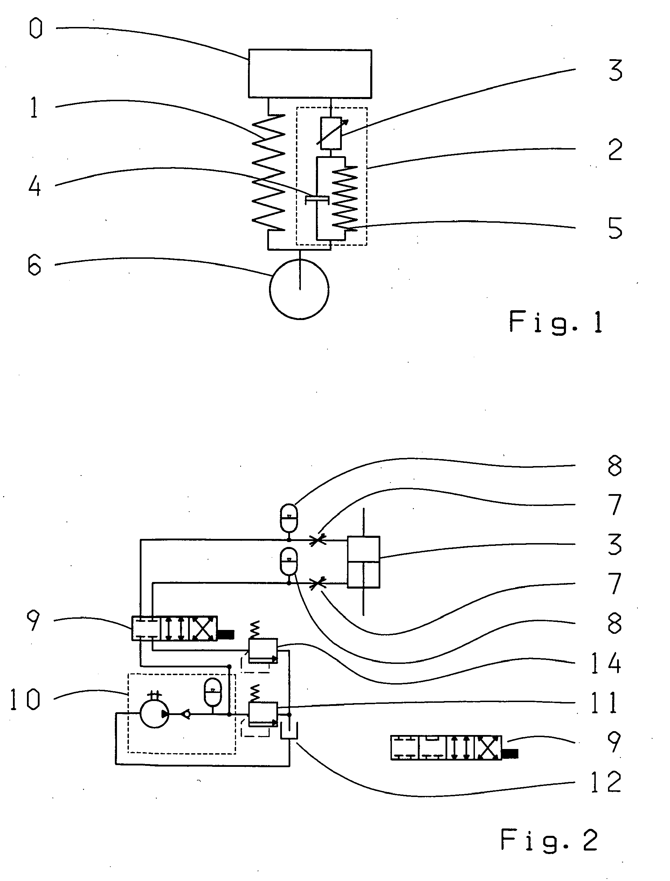

Wie in Figur 1 veranschaulicht, umfasst ein erfindungsgemäßes aktives Fahrwerk einen Aktuator 2, der einen hydraulischen Stellzylinder 3, einen Schwingungsdämpfer 4 und eine teiltragende Aufbaufeder 5 aufweist, wobei parallel zum Aktuator 2 eine teiltragende zweite Aufbaufeder 1 geschaltet ist; die Aufbaumasse ist mit 0 und die ungefederten Radmassen mit 6 bezeichnet. Hierbei ist der Schwingungsdämpfer 4 parallel zur Aufbaufeder 5 geschaltet; der Stellzylinder 3 ist in Reihe zur Aufbaufeder 5 und zum Schwingungsdämpfer 4 geschaltet. Obwohl die Erfindung anhand einer Ausführungsform erläutert wird, welche einen hydraulischen Stellzylinder aufweist, kann der Stellzylinder auch pneumatisch ausgeführt sein.

In Figur 2 ist eine mögliche Ausführungsform der Anordnung zur Ansteuerung eines hydraulischen Stellzylinders 3 des Aktuators 2 für ein aktives Fahrwerk gemäß der Erfindung dargestellt. Hierbei ist zur Ansteuerung ein Schaltventil 9 vorgesehen, wobei die erforderliche Zug-/Druckkraft in der Kolbenstange des Stellzylinders 3 über die Druckdifferenz in den beiden Arbeitsräumen des hydraulischen Stellzylinders 3 erzeugt wird. Die Druckminderung wird von den Strömungswiderständen der Tankentlüftung und dem Druckventil 14 zur Einstellung des Systemmindestdrucks bestimmt.

Beim teiltragenden System gemäß der Erfindung wird der Stellzylinder 3 des hydraulischen Aktuators 2 kolben- und stangenseitig getrennt gesteuert oder geregelt, damit bei Entlastung eines Rades 6 aufgrund fahrdynamischer Fahrzustandsänderungen der Aktuator gegen die in der Aufbaufeder 1 gespeicherte Energie arbeiten kann (Zusammendrücken der Aufbaufeder 1 bei Entlastung) und das Rad 6 bei statischer Entlastung nicht ausfedert. Bei zusätzlicher Belastung des Rades unterstützt der hydraulische Aktuator 2 die Aufbaufeder 1 und bringt zusätzliche Kräfte auf, damit das Rad 6 bei statischer Belastung nicht einfedert.

Die Dämpfkraft für die Ein- und Ausfederbewegung wird erfindungsgemäß über die beiden Dämpfungsventile 7 pro Stellzylinder 3 unabhängig voneinander eingestellt, wodurch keine Verstellung des Dämpfungsventils für die eine Bewegungsrichtung erforderlich ist, wenn sich die Bewegungsrichtung umkehrt. Dies resultiert in einer genaueren und schnelleren Einstellung der Dämpfkraft, im Vergleich zu einem System, welches ein Ventil für beide Bewegungsrichtungen aufweist, das in nachteiliger Weise bei Bewegungsrichtungswechsel jeweils auf einen anderen Stellpunkt springen muss. Wie aus Figur 2 ersichtlich, ist vor jedem Dämpfungsventil 7 eine Gasfeder geschaltet.

Gemäß der Erfindung werden dynamische Radlaständerungen im niederfrequenten Bereich (z.B. bei normaler Kurvenfahrt oder anhaltendem Beschleunigen oder Bremsen) durch Änderung des mittleren Arbeitsdrucks in den Arbeitsräumen des Zylinders 3 kompensiert, wobei eine Radlasterhöhung in einer Druckerhöhung im Zylinderraum und/oder in einer Druckminderung im Kolbenstangenraum und eine Radlastminderung in einer Druckminderung im Zylinderraum und/oder einer Druckerhöhung im Kolbenstangenraum resultiert. In der Figur 2 ist die Hydraulikversorgung mit 10, das Druckventil mit 11 und der Tank für das Hydraulikfluid mit 12 bezeichnet.

Höherfrequente Radlaständerungen (z.B. bei plötzlichem Spurwechsel oder bei der bei Bremsbeginn auftretenden Nickschwingung) werden durch die Dämpfungsventile 7 nach Komfortgesichtspunkten teilweise kompensiert und können in Verbindung mit z.B. CDC-Ventilen oder ASD-Ventilen oder ähnlichen Systemen den Gewinn an Fahrsicherheit und Komfort ergänzen.

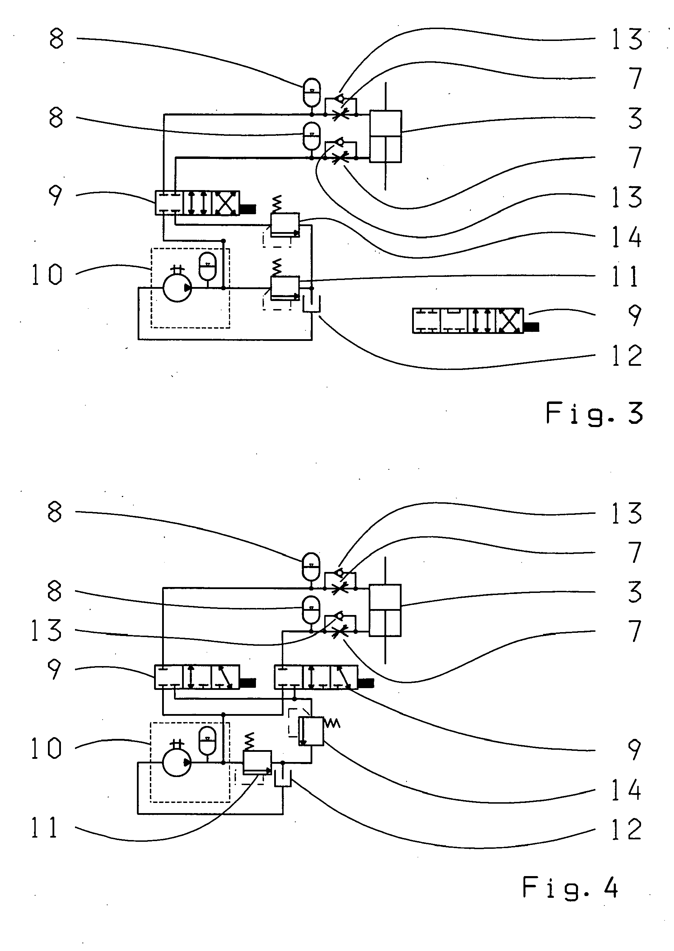

Die in Figur 3 gezeigte Anordnung unterscheidet sich von der Anordnung gemäß Figur 2 dadurch, dass parallel zu jedem Dämpfungsventil 7 ein Rückschlagventil 13 geschaltet ist. Es wird, wie bei dem Beispiel gemäß Figur 1, ein Schaltventil 9 pro Rad benötigt.

Die Ausführungsform gemäß Figur 4 unterscheidet sich von der im Rahmen von Figur 3 gezeigten darin, dass pro Rad zwei Schaltventile 9 vorgesehen sind, wobei jedes Schaltventil 9 mit einem Dämpfungsventil 7 verbunden ist.

Durch die vorliegende Erfindung wird ein aktives Fahrwerk zur Verfügung gestellt, welches die Integration der Funktionen Hub- und/oder Nick- und/oder Wank- und/oder Niveauausgleich in eine Aktuatorik je Rad ermöglicht und einen konventionellen oder passiven Stabilisator substituiert. Zudem kann der Aktuator in beliebige Fahrzeuge (z.B. ein- oder zweispurig mit beliebiger Achsanzahl) integriert werden.

Bei Auslegung des hydraulischen Aktuators auf ein Druckniveau von etwa 150 bar bis 180 bar kann der Bauraum des konventionellen Dämpfers genutzt werden. Ferner kann der Aktuator in vorteilhafter Weise nachträglich in Fahrzeuge eingebaut werden und lässt sich mit allen Systemen bestehender Dämpfer kombinieren (passive Dämpfung, CDC, ASD, Skyhook-Prinzipien).

Der Aktuator des aktiven Fahrwerks kann optional oder nachträglich in Fahrzeuge eingebaut werden. Auch ist eine Rückrüstung auf ein rein passives System denkbar.

Selbstverständlich fällt auch jede konstruktive Ausbildung, insbesondere jede räumliche Anordnung der Bauteile des erfindungsgemäßen aktiven Fahrwerks bzw. des Aktuators für ein aktives Fahrwerk sowie der Anordnung zur Ansteuerung des Stellzylinders an sich sowie zueinander und soweit technisch sinnvoll, unter den Schutzumfang der vorliegenden Ansprüche, ohne die Funktion des aktiven Fahrwerks bzw. des Aktuators, wie sie in den Ansprüchen angegeben ist, zu beeinflussen, auch wenn diese Ausbildungen nicht explizit in den Figuren oder in der Beschreibung dargestellt sind.

### Bezugszeichen

- 0: Aufbaumasse
- 1: teiltragende Aufbaufeder
- 2: Aktuator
- 3: hydraulischer Stellzylinder
- 4: Schwingungsdämpfer
- 5: teiltragende Aufbaufeder
- 6: ungefederte Radmassen
- 7: Dämpfungsventil
- 8: Gasfeder
- 9: Schaltventil
- 10: Hydraulikversorgung
- 11: Druckventil
- 12: Tank
- 13: Rückschlagventil
- 14: Druckventil

## Patentansprüche

1. Aktives Fahrwerk für ein Kraftfahrzeug, welches einen Aktuator mit einem hydraulischen oder pneumatischen Stellzylinder und einen Schwingungsdämpfer umfasst, **dadurch gekennzeichnet, dass** der Aktuator (2) eine teiltragende Aufbaufeder (5) aufweist und dass parallel zum Aktuator (2) eine teiltragende zweite Aufbaufeder (1) geschaltet ist, wobei der Schwingungsdämpfer (4) parallel zur Aufbaufeder (5) des Aktuators (2) geschaltet und der Stellzylinder (3) in Reihe zur Aufbaufeder (5) und zum Schwingungsdämpfer (4) geschaltet ist.

2. Aktives Fahrwerk für ein Kraftfahrzeug nach Anspruch 1, **dadurch gekennzeichnet, dass** die statischen Aufbaumassen (0) durch die parallel zum Aktuator (2) geschaltete zweite Aufbaufeder (1) größtenteils getragen werden, wobei die Aufbaufeder (1) so ausgelegt ist, dass sie die statischen Vertikalkräfte, die aus der momentanen Aufbaumasse plus Zuladung resultieren, abstützt, wobei in allen anderen Fällen der Aktuator (2) die Änderungen der statischen Aufbaukräfte durch Beladungsänderung aufnimmt.

3. Aktives Fahrwerk für ein Kraftfahrzeug nach Anspruch 1 oder 2, **dadurch gekennzeichnet, dass** bei Fahrzeugen mit geringer Ladungsspreizung die zweite Aufbaufeder (1) als eine konventionelle Stahlfeder ausgebildet ist, wobei in diesem Fall der Aktuator (2) zusätzlich die Funktion der Niveauregulierung übemimmt.

4. Aktives Fahrwerk für ein Kraftfahrzeug nach Anspruch 1 oder 2, **dadurch gekennzeichnet, dass** bei Fahrzeugen mit großer Ladungsspreizung die zweite Aufbaufeder (1) als Luftfeder oder hydropneumatische Feder ausgeführt ist und zusätzlich der Niveauregulierung dient, wodurch der stationäre Offset (Grundlast) des Aktuators (2) auf Null gesetzt wird.

5. Aktives Fahrwerk für ein Kraftfahrzeug nach einem der vorangehenden Ansprüche, **dadurch gekennzeichnet, dass** jedem Stellzylinder (3) zwei Dämpfungsventile (7) zugeordnet sind, derart, dass die Dämpfkraft für die Ein- und Ausfederbewegung über die beiden Dämpfungsventile (7) unabhängig voneinander einstellbar ist, wobei vor den Ventilen (7) jeweils eine Gasfeder (8) geschaltet ist.

6. Aktives Fahrwerk für ein Kraftfahrzeug nach einem der vorangehenden Ansprüche, **dadurch gekennzeichnet, dass** dynamische Radlaständerungen im niederfrequenten Bereich durch Änderung des mittleren Arbeitsdrucks in den Arbeitsräumen des Zylinders (3) kompensierbar sind, wobei eine Radlasterhöhung in einer Druckerhöhung im Zylinderraum und/oder in einer Druckminderung im Kolbenstangenraum und eine Radlastminderung in einer Druckminderung im Zylinderraum und/oder einer Druckerhöhung im Kolbenstangenraum resultiert und wobei höherfrequente Radlaständerungen durch die Dämpfungsventile (7) nach Komfortgesichtspunkten teilweise kompensierbar sind.

7. Aktives Fahrwerk für ein Kraftfahrzeug nach einem der vorangehenden Ansprüche, **dadurch gekennzeichnet, dass** der Stellzylinder (3) des Aktuators (2) kolben- und stangenseitig getrennt steuerbar oder regelbar ist, wobei bei Entlastung eines Rades (6) aufgrund fahrdynamischer Fahrzustandsänderungen der Aktuator (2) gegen die in der Aufbaufeder (1) gespeicherte Energie arbeitet, so dass das Rad (6) bei statischer Entlastung nicht ausfedert und wobei bei zusätzlicher Belastung des Rades (6) der Aktuator (2) die Aufbaufeder (1) unterstützt und zusätzliche Kräfte aufbringt, damit das Rad (6) bei statischer Belastung nicht einfedert.

8. Aktives Fahrwerk für ein Kraftfahrzeug nach einem der vorangehenden Ansprüche, **dadurch gekennzeichnet, dass** parallel zu jedem Dämpfungsventil (7) ein Rückschlagventil (13) geschaltet ist.

9. Aktives Fahrwerk für ein Kraftfahrzeug nach einem der vorangehenden Ansprüche, **dadurch gekennzeichnet, dass** pro Rad ein Schaltventil (9) vorgesehen ist.

10. Aktives Fahrwerk für ein Kraftfahrzeug nach einem der vorangehenden Ansprüche 1 bis 8, **dadurch gekennzeichnet, dass** pro Rad zwei Schaltventile (9) vorgesehen sind.
